# EUROPEAN PATENT SPECIFICATION

(11) **EP 0 837 451 B1**
(45) Date of publication and mention of the grant of the patent: **22.12.2004**
(21) Application number: 97117361.2
(22) Date of filing: 08.10.1997
(51) Int. Cl.: G10H 1/00

(54) **Method of extending capability of music apparatus by networking**
Verfahren zur Erweiterung der Fähigkeit einer Musikvorrichtung durch ein Netzwerk
Méthode d'augmentation des possibilités d'un dispositif musical par l'intermédiaire d'un réseau numérique

(30) Priority: 18.10.1996 JP 27646296; 22.08.1997 JP 22628597
(43) Date of publication of application: 22.04.1998
(73) Proprietor: YAMAHA CORPORATION, Hamamatsu-shi, Shizuoka-ken 430 (JP)
(72) Inventor: Ide, Kensuke, Hamamatsu-shi, Shizuoka-ken, 430 (JP)
(74) Representative: Kehl, Günther, Dipl.-Phys.

(56) References cited:
- EP-A- 0 372 678
- WO-A-92/08192
- US-A- 5 020 410
- US-A- 5 300 725

## Description

### BACKGROUND OF THE INVENTION

The present invention generally relates to a network system constructed by a host computer and local terminals. Specifically, the present invention relates to a method of extending a capability of a music apparatus equipped in the local terminal in the form of an electronic musical instrument or a personal computer having function of an electronic musical instrument.

In the field of electronic musical instruments, various capabilities have been conventionally realized, including a timbre synthesis capability for synthesizing timbres and an automatic accompaniment capability for performing automatic accompaniment by reproducing play data of an accompaniment pattern. Some of these capabilities are initially provided on electronic musical instruments, while others are not. It would be convenient if the capabilities not inherently provided in an electronic musical instrument can be subsequently added thereto. It is desired to provide a service for implementing such addition of the various capabilities. The same is true for a personal computer having function of an electronic musical instrument realized by an application software.

Most of the above-mentioned capabilities are conventionally implemented by microcomputer-based data processing. Electronic musical instruments themselves are also controlled by a microcomputer. This makes it possible to use, via a network, programs and other software resources that can implement various capabilities, thereby extending capabilities of the electronic musical instrument and personal computer having the electronic musical instrument function.

. Meanwhile, use of the software resources reserved in a host computer by local terminals such as personal computers is conventionally practiced by connecting these local terminals to the host computer through a network. A procedure most frequently used in such a configuration is downloading of application programs from the host computer into the local terminals.

However, In the above-mentioned conventional procedure, the local terminal cannot execute a downloaded program if hardware resources of the local terminal is not enough for executing the downloaded program. Another problem with the conventional procedure is that local terminals of some types cannot install the application program due to incompatibility of their operating system or else. Still another problem is that, if the size of a program to be used is huge, a local terminal must download the program while consuming a considerable time without recognizing advantage and performance that the program will provide until the downloading is finished.

EP-A-0 372 678 discloses a system using a computer and keyboard for reproducing music and displaying words to the music. Data for reproducing music and displaying words are composed of binary-coded digital signals. Such signals are downloaded via a public communication line, or data corresponding to a plurality of musical pieces or songs are previously stored in an apparatus, and the stored data are selectively processed by a central processing unit of a computer. In the instrumental music data, trigger signals are existent for progression of processing the words data, whereby the reproduction of music and the display of words are linked to each other. The music thus reproduced is utilized as background music or for enabling the user to sing to the accompaniment thereof while watching the words displayed synchronously with such music reproduction.

US-A-5 300 725) describes an automatic playing apparatus which performs an automatic performance of a musical piece in accordance with audio data and sequence data. These data may be obtained from an external storage such as a compact disk (CD) or via a telephone network from a remote storage.

In US-A-5 020 410 a sound generation package and an electronic musical instrument are disclosed. The sound generation package is a hardware sound source of a card or module type which can be coupled to the electronic musical instrument. The package contains a timbre editing program which can be used via the electronic musical instrument in order to define the timbre of a sound source signal to be output by sound source means included in the sound generation package.

WO-A-9 208 192 discloses a system and method for dynamically linking code segments in real time. Described is a technique of transferring a DSP program module for audio processing from a host CPU to a shared memory. The known system is directed to enabling the generation of different sounds at the same time. In order to achieve this several different program source codes have to be linked together at the same time, and have to be written into the same memory without having to delete the program code which is currently processed by the host CPU. In short, this citation deals with the problem of using one memory for processing several different program codes at the same time.

### SUMMARY OF THE INVENTION

It is therefore an object of the present invention as defined by the appended claims to achieve, by focusing on a network constituted by a host computer and local terminals, an extension of capabilities of a music apparatus such as an electronic musical instrument and a personal computer having function of an electronic musical instrument without any restriction from a local terminal to which the music apparatus is connected.

### BRIEF DESCRIPTION OF THE DRAWINGS

FIG.1 is a block diagram illustrating a network system to which the present invention is applied;
FIG. 2 is a diagram illustrating a procedure of data communication when using a timbre synthesis capability of a host computer in the first embodiment of the invention;
FIG. 3 is a diagram illustrating a procedure of data communication when using an automatic accompaniment capability of a host computer in the second embodiment of the invention;
FIG. 4 is a diagram illustrating a data flow during automatic accompaniment in the second embodiment;
FIG. 5 is a diagram illustrating a procedure of data communication when using an electronic musical instrument simulating capability of a host computer in the third embodiment of the invention;
FIG. 6 is a diagram illustrating a program structure installed in a host computer;
FIG. 7 is a diagram illustrating a program structure downloaded in a music apparatus equipped in a local terminal;
FIG. 8 is a flowchart of a program concerning data communication process in the musical apparatus;
FIGS. 9A, 9B and 9C are a flowchart of a program concerning data communication process in the local terminal; and
FIG. 10 is a flowchart of a program concerning data communication process in the host computer.

### DETAILED DESCRIPTION OF THE INVENTION

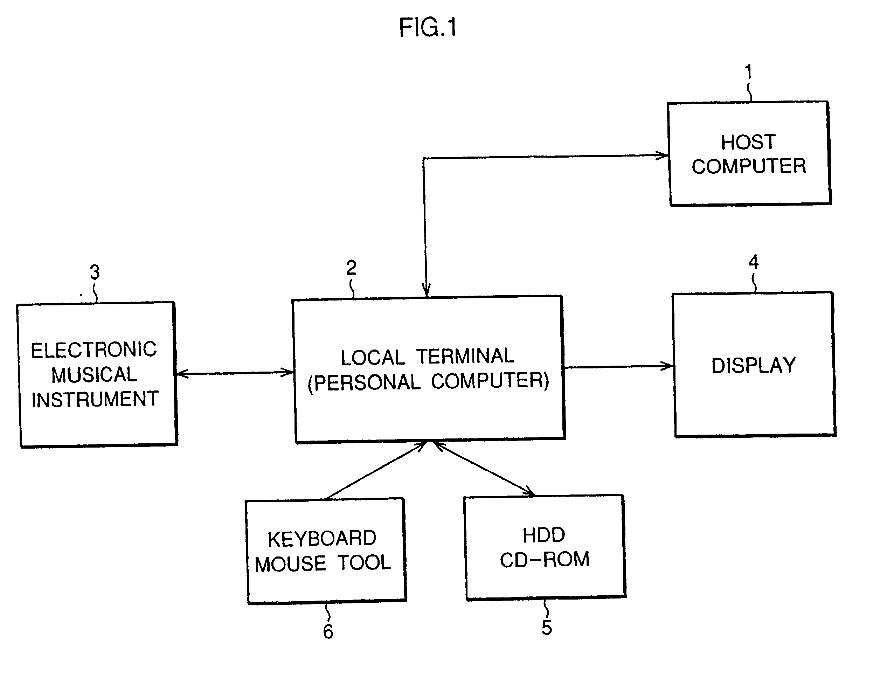

This invention will be described in further detail by way of example with reference to the accompanying drawings. FIG. 1 is a block diagram illustrating a network system to which the present invention is applied. A host computer 1 is connected to a local terminal 2 such a personal computer or the like having a central processing unit (CPU). The local terminal 2 is connected to those of a music apparatus in the form of an electronic musical instrument 3, a display 4, an external storage device 5 such as an HDD (Hard Disk Drive) or a CD-ROM drive, and an input device 6 such as a keyboard or a mouse tool. It should be noted that the electronic musical instrument 3 and the local terminal 2 are interconnected by MIDI (Musical Instrument Digital Interface) or other communication protocols. Data is communicated between the host computer 1 and the local terminal 2, and between the local terminal 2 and the electronic musical instrument 3. Alternatively, the music apparatus may be composed of a personal computer having a function of an electronic musical instrument implemented by an application software in place of the electronic musical instrument 3.

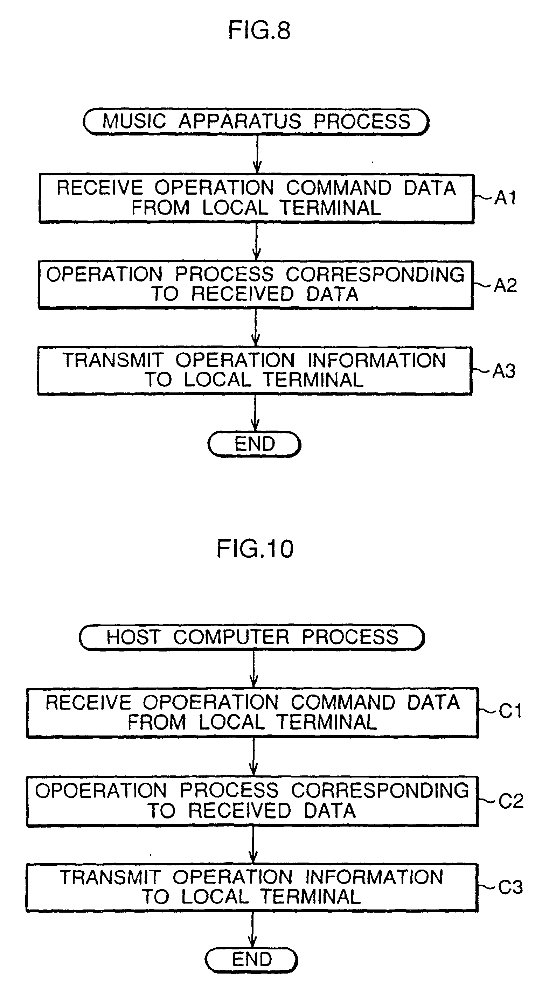

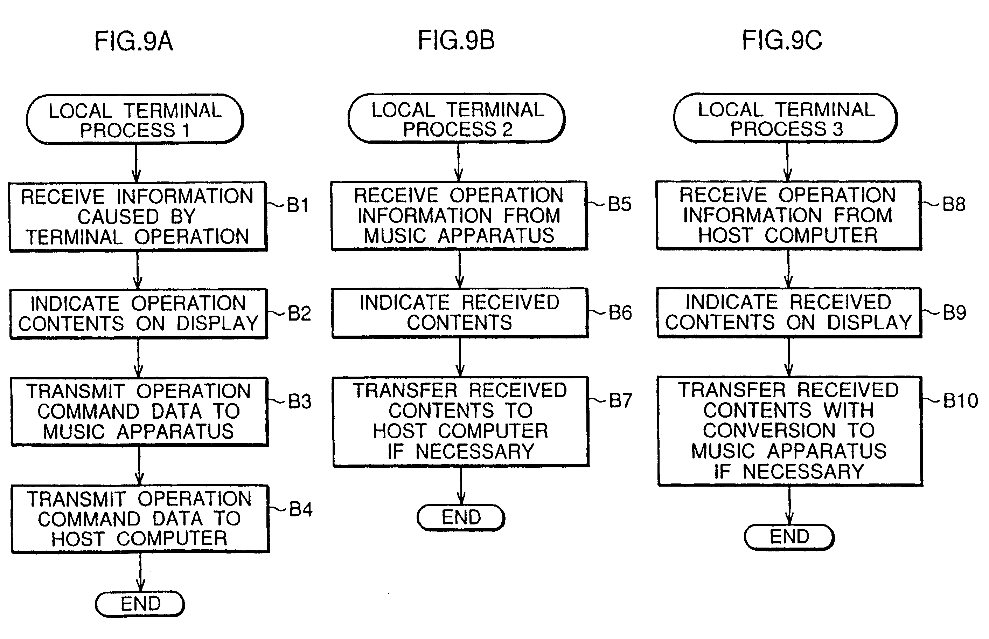

FIG. 8 is a flowchart of a program concerning data communication process of the music apparatus such as the electronic musical instrument 3 or the personal computer. FIGS. 9A, 9B and 9C are a flowchart of a program concerning data communication process of the local terminal 2. FIG. 10 is a flowchart of a program concerning data communication process of the host computer 1.

As shown in FIG. 8, the music apparatus receives operation command data from the local terminal 2 in step A1, carries out operation process corresponding to the received data in step A2, and transmits operation information to the local terminal 2 in step A3, thereby finishing one communication cycle.

As shown in FIG. 9A, the local terminal 2 receives information inputted by operation of the input device 6 in step B1, and displays contents of the operation on the display 4 in step B2. If there is operation command data for the music apparatus , the local terminal 2 transmits the operation command data to the music apparatus in step B3. If there is operation command data for the host computer 1, the local terminal 2 transmits the operation command data to the host computer 1 in step B4, thereby completing one communication cycle according to a first transmission mode.

As shown in FIG. 9B, the local terminal 2 receives operation information from the music apparatus 3 in step B5, and displays the received contents on the display 4 in step B6. In step B7, the local terminal 2 transmits the received contents if necessary to the host computer 1 while converting the received contents into a command acceptable by the host computer1, thereby finishing one communication cycle under a second transmission mode.

Further, as shown in FIG. 9C, the local terminal 2 receives operation information from the host computer 1 in step B8, and displays the received contents on the display 4 in step B9. In step B10, the local terminal 2 transfers the received contents to the music apparatus 3 if necessary while converting the received contents into a command acceptable by the music apparatus, thereby ending one communication cycle under a third transmission mode.

Further, as shown in FIG. 10, the host computer 1 receives operation command data from the local terminal 2 in step C1, carries out operation process corresponding to the received data in step C2, and transmits operation information to the local terminal 2 in step C3, thereby finishing one communication cycle.

As described above, the music apparatus, the local terminal 2 and the personal computer 1 constitute together a system to conduct the data communication to perform extension of the capability of the music apparatus. Namely, The inventive system is constructed for operating the music apparatus having a function as the electronic musical instrument 3 under control by the local terminal 2 which is communicable with the host computer 1 through a network. In the system, the host computer 1 is installed with a capability utilized to compute data effective to extend the function of the electronic musical instrument 3. The local terminal 2 is connectable to the host computer 1 through the network to remotely control the capability of the host computer 1 so as to compute the data prepared for the music apparatus. The local terminal 2 downloads the computed data from the host computer 1 into the music apparatus through the local terminal 2. The music apparatus operates according to the downloaded data to extend its own function as the electronic musical instrument 3.

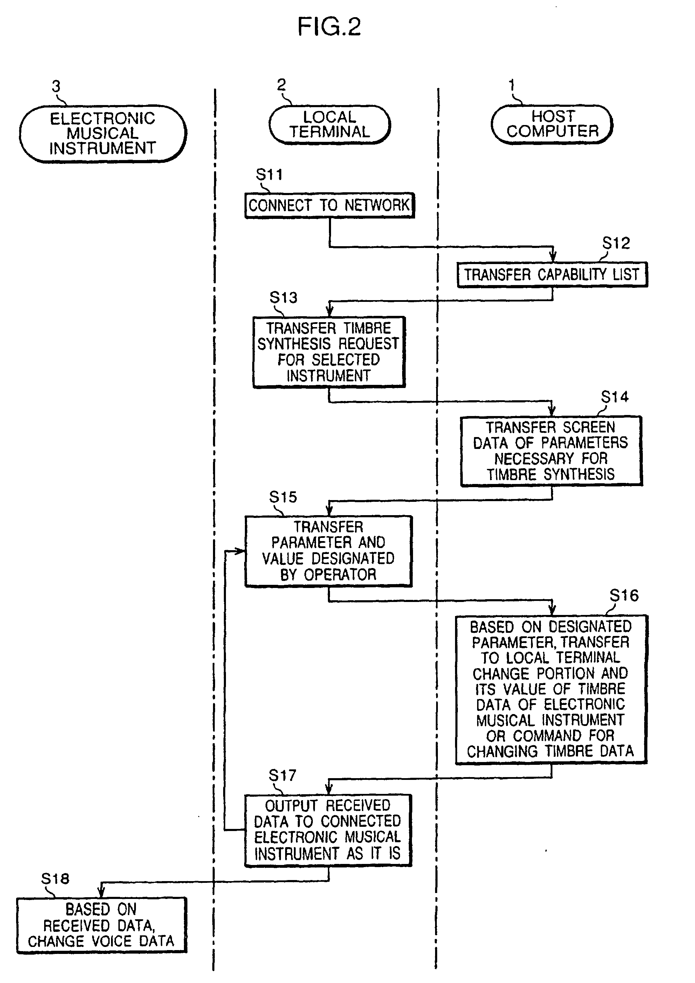

The following is examples of various capabilities. In these examples, the electronic musical instrument 3 is connected as the music apparatus to the local terminal 2. FIG. 2 is a diagram illustrating the first embodiment of the invention, a procedure of data communication for using a timbre synthesis capability of the host computer 1. First, the local terminal 2 is connected to the network to access the host computer 1 (S11). The host computer 1 transfers to the local terminal 2 data for displaying a list of capabilities available in the host computer 1 (S12). Receiving this data, the local terminal 2 displays the list on the display 4, and waits for input operation by the user or operator. The operator enters selection of a capability from the input device 6. When the timbre synthesis capability is selected, the local terminal 2 sends a timbre synthesis request to the host computer 1. (S13).

Receiving the timbre synthesis request or command, the host computer 1 sends data used for displaying a parameter setting screen to the local terminal 2 to request for parameters necessary for timbre synthesis(S14). The parameter setting screen may look like a display screen created by a timbre synthesizer application software designed for personal computers. The local terminal 2 displays the parameter setting screen on the display 4, and waits for input of operation by the operator. When a parameter is selected by the operator on the display screen, the local terminal 2 sends the type and value of the selected parameter to the host computer 1 (S15).

Based on the received parameter, the host computer 1 sends to the local terminal 2 a change item and its value of the timbre data of the electronic musical instrument or a command for changing the timbre data itself (S16). The local terminal 2 outputs the data from the host computer 1 to the electronic musical instrument 3 as it is (S17). Based on the data received from the local terminal 2, the electronic musical instrument 3 changes timbre or voice(S18). By repeating the above-mentioned parameter transfer from the local terminal 2 to the host computer 1, data transfer from the host computer 1 to the local terminal 2, and data transfer from the local terminal 2 to the electronic musical instrument 3, the local terminal 2 can remotely control the timbre synthesis capability or synthesizer capability on the host computer 1, thereby providing generated timbre data as voice data to the electronic musical instrument 3.

Namely, the first embodiment of the invention shown in FIG. 2 is directed to a method of operating a music apparatus to function as the electronic musical instrument 3 under control by the local terminal 2 which is communicable with the host computer 1 through a network. The inventive method comprises the steps of provisionally installing the host computer 1 with a synthesizer capability utilized to compute timbre data, connecting the local terminal 2 to the host computer 1 through the network to remotely control the synthesizer capability of the host computer 1 so as to compute the timbre data prepared for the music apparatus, downloading the computed timbre data from the host computer 1 into the music apparatus through the local terminal 2 so as to set a desired timbre of a musical tone, and operating the music apparatus to function as the electronic musical instrument 3 to generate the musical tone having the desired timbre set by the downloaded timbre data.

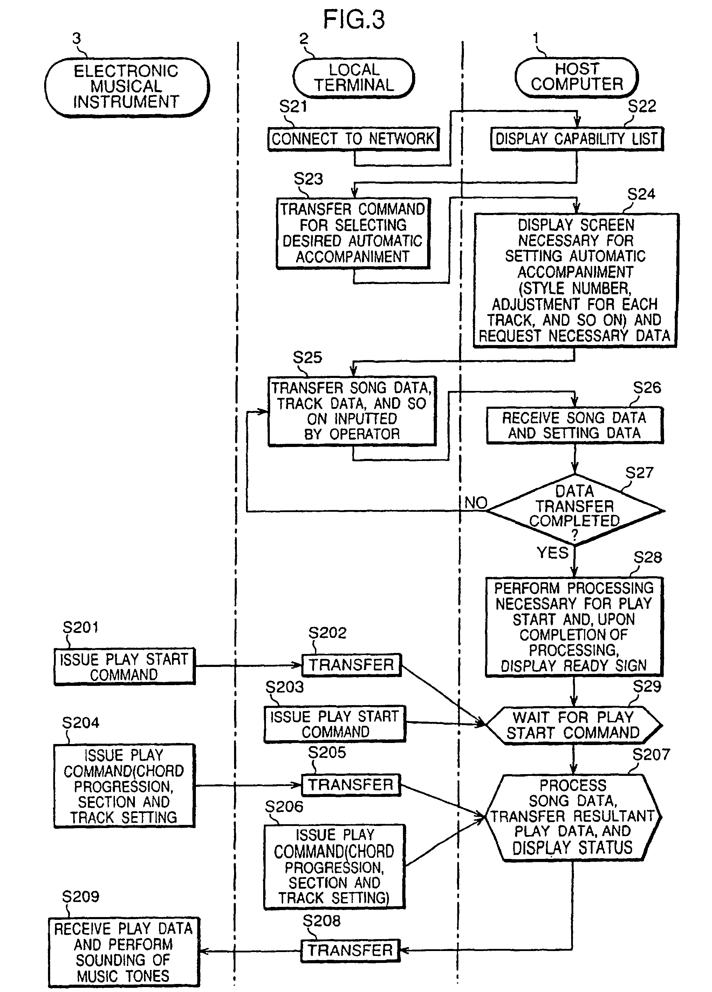

FIG. 3 is a diagram illustrating the second embodiment of the invention, a procedure of data communication when the automatic accompaniment capability is used. First, the local terminal 2 is connected to a network to access the host computer 1 (S21). The host computer 1 transfers data for displaying a list of capabilities installed in the host computer itself to the local terminal 2 (S22). The local terminal 2 displays the capability list on a display 4, and waits for input of selection by the operator. When the operator selects the automatic accompaniment capability, the local terminal 2 transfers an automatic accompaniment request to the host computer 1 (S23).

Receiving the automatic accompaniment request, the host computer 1 sends to the local terminal 2 screen setting data used for displaying a setting screen necessary for setting automatic play such as automatic accompaniment (semi-automatic play) or automatic performance (ful-automatic play), as well as a request necessary for setting condition of the automatic accompaniment or automatic performance (S24). The setting screen may look like a display screen of a sequencer (on which style number setting, adjustment of each track, and so on are performed). The local terminal 2 displays the setting screen on the display 4, and waits for input of setting by the operator. When data is entered by the operator on this setting screen, the local terminal 2 sends the inputted data including song data, track data, and so on to the host computer 1 (S25).

The host computer 1 receives the setting data such as song data and track data from the local terminal 2 (S26). The host computer 1 determines whether the transfer of the data has been completed (S27). If the transfer has not been completed, the host computer 1 receives the remaining data from the local terminal 2. When the transfer has been completed, the host computer 1 performs processing necessary for starting the automatic play. When this processing has been completed, the host computer 1 makes the local terminal 2 display a ready sign (S28). At this moment, the automatic play such as automatic accompaniment is ready to start, and the local terminal 2 waits for starting of manual play by the operator on the electronic musical instrument 3 (S29).

When the operator starts playing on the electronic musical instrument 3, the electronic musical instrument 3 issues a play start command to the local terminal 2 (S201). The local terminal 2 transfers this play start command to the host computer 1 (S202). It should be noted that the local terminal 2 may also issue a play start command to the host computer 1 in place of the electronic musical instrument 3(S203). Receiving the play start command, the host computer 1 starts processing of the song data to time- sequentially issue automatic play data. Meanwhile, the electronic musical instrument 3 outputs a play command indicating chord progression, a section indicative of instrument type, and track setting to the local terminal 2 (S204). The local terminal 2 transfers this play command to the host computer 1 (S205). When a play command is directly inputted in the local terminal 2, the inputted play command is also transferred to the host computer 1 (S206). Based on the above-mentioned play commands, the host computer 1 time-sequentially processes the song data as a regular sequencer would do, and transfers automatic play data to the local terminal 2. At the same time, the host computer 1 transfers status information such as music progression state to the local terminal 2 (S207). The local terminal 2 transfers the play data transmitted from the host computer 1 to the electronic musical instrument 3 (S208). Receiving the play data, the electronic musical instrument 3 performs sounding process of the automatic play (S209). Thus, even if the electronic musical instrument 3 has no automatic accompaniment capability or sequencer capability, automatic accompaniment can be performed by the pre-installed application program of the host computer 1.

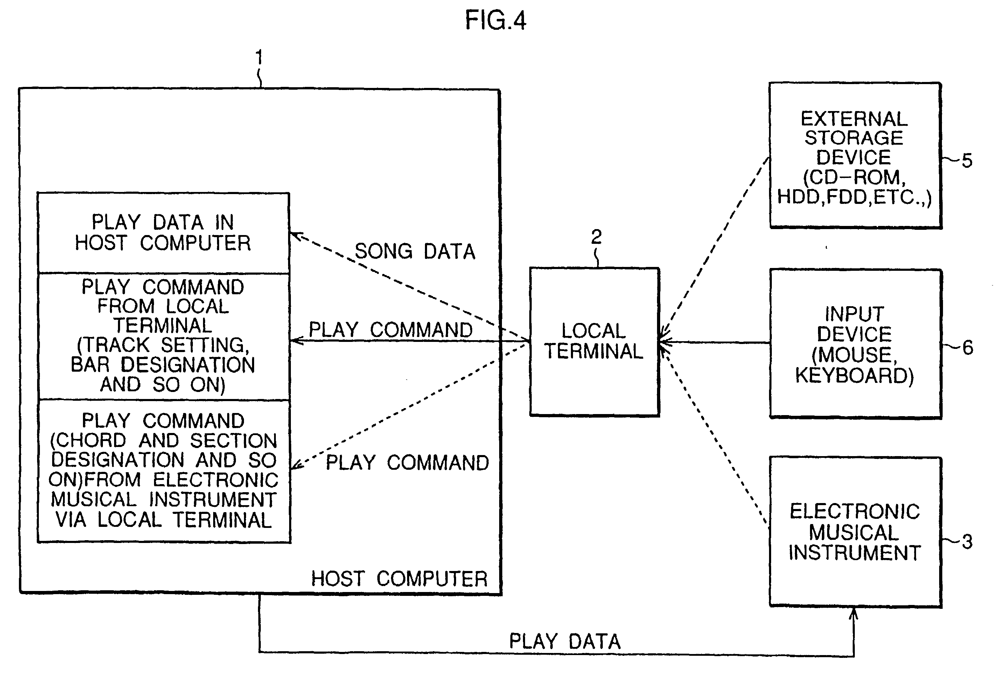

FIG. 4 is a diagram indicating the data flow during the above-mentioned automatic accompaniment. First, the external storage device 5 stores song data which is a meta-file or source file of play data. As indicated with a dashed-line, this song data is supplied to the host computer 1 via the local terminal 2 to be stored as the source file in the host computer 1. It should be noted that, in this automatic accompaniment, if the song data is read section by section from the local terminal 2 for storage, a next section is sequentially read from the local terminal 2 for storage without interrupting the progression of the performance before the preceding section runs out.

As indicated with a solid-line, data from the input device 6 is inputted into the local terminal 2. The local terminal 2 extracts play command data such as track setting and bar designation data from this input data and transfers the same to the host computer 1 for storage therein. As indicated with a dotted-line, play command data such as data for designating chord and part from the electronic musical instrument 3 is transferred to the host computer 1 via the local terminal 2 for storage in the host computer 1. Further, as indicated with another solid-line, play data reproduced by the automatic accompaniment capability of the host computer 1 is transferred to the electronic musical instrument 3. It should be noted that, since in automatic accompaniment the play data is reproduced based on the chord progression transmitted from the electronic musical instrument 3, play command data indicated with the dashed-line from the electronic musical instrument 3 is required. For simple automatic performance, this play command data is not required.

The second embodiment shown in FIGS. 3 and 4 is directed to a method of operating a music apparatus to function as an electronic musical instrument 3 according to song data representative of a desired song under control by the local terminal 2 which is communicable with the host computer 1 through a network. The method comprises the steps of installing the host computer 1 with a sequencer capability utilized to time-sequentially process the song data to compute automatic play data, connecting the local terminal 2 to the host computer 1 through the network to remotely control the sequencer capability of the host computer 1 while supplying thereto the song data so as to compute the automatic play data prepared for the music apparatus, downloading the computed automatic play data from the host computer 1 into the music apparatus through the local terminal 2, and operating the music-apparatus to function as the electronic musical instrument 3 to undergo an automatic play of the desired song according to the downloaded automatic play data.

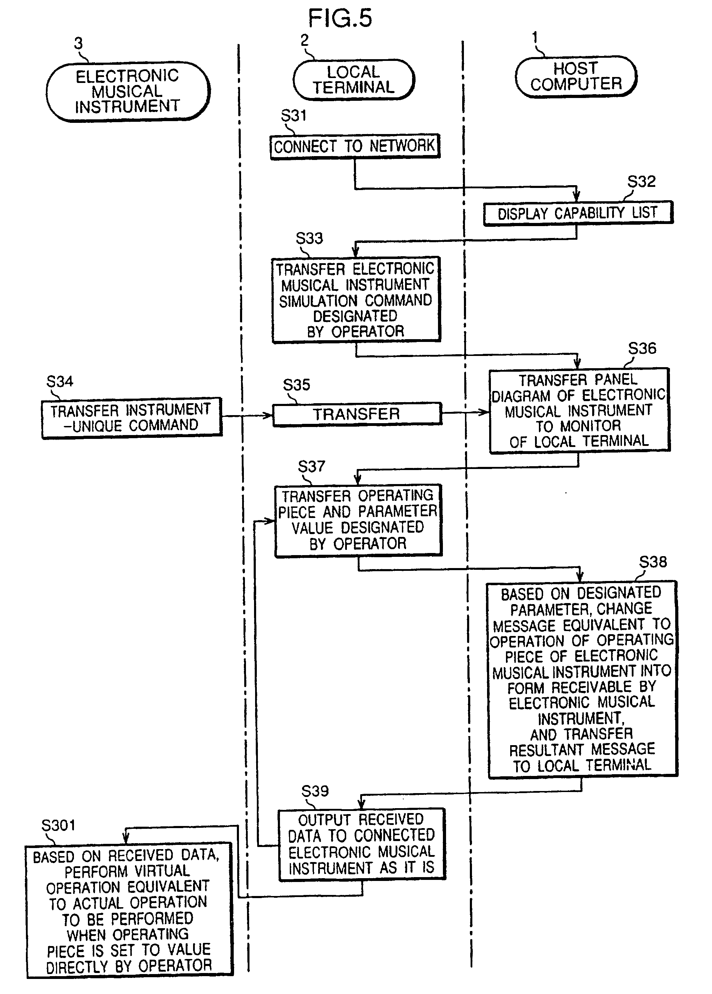

FIG. 5 is a diagram illustrating the third embodiment of the invention, a procedure of data communication for using the electronic musical instrument simulating capability. First, the local terminal 2 is connected to a network to access the host computer 1 (S31). Data about a list of capabilities to be provided by the host computer 1 is transferred therefrom to the local terminal 2 (S32). The local terminal 2 displays the capability list on the display 4 and waits for input of selection by the operator. When the operator selects the electronic musical instrument simulating capability or emulator capability, the local terminal 2 transfers an electronic musical instrument simulation command to the host computer 1 (S33). The electronic musical instrument 3 outputs an instrument-unique command indicating the type and so on of this instrument to the local terminal 2 (S34). The local terminal 2 transfers this instrument-unique command to the host computer 1 (S35).

Receiving the electronic musical instrument simulation command and the instrument-unique command, the host computer 1 transfers screen data for displaying a panel diagram of the electronic musical instrument 3 to the local terminal 2 (S36). Based on the received screen data, the local terminal 2 displays the panel diagram of the electronic musical instrument 3 on the display 4, and waits for input of setting by the operator. When an operating piece of the musical instrument and a parameter value are designated by the operator on this panel diagram, the local terminal 2 transfers data indicating the type of the operating piece and the parameter value to the host computer 1 (S37).

Based on the received parameter value, the host computer 1 simulates operation of the designated operating piece of the electronic musical instrument 3 up to that parameter value, and generates a message equivalent to the simulated operation. The host computer changes this message into a form receivable by the electronic musical instrument 3, and transfers the result to the local terminal 2 (S38). The local terminal 2 outputs the data coming from the host computer 1 to the electronic musical instrument 3 as it is (S39). Based on this data coming from the local terminal 2, the electronic musical instrument 3 operates virtually(S301). This allows the electronic musical instrument 3 to virtually perform an operation equivalent to that to be performed when an actual operating piece is set to the parameter value designated by the local terminal 2. By repeating the transfer of the operating piece type data and the parameter value from the local terminal 2 to the host computer 1, the data transfer from the host computer 1 to the local terminal 2, and the data transfer from the local terminal 2 to the electronic musical instrument 3, the local terminal 2 can control the electronic musical instrument simulating capability of the host computer 1. By simulating or emulating the operation of the electronic musical instrument 3, the user becomes familiar with the specifications, capabilities, and handling of the electronic musical instrument 3.

The third embodiment of the invention shown in FIG. 5 is directed to a method of operating a music apparatus to function as an electronic musical instrument under control by the local terminal 2 which is communicable with the host computer 1 through a network. The inventive method comprises the steps of pre-installing the host computer 1 with an emulator capability utilized to emulate an operation of the electronic musical instrument 3, connecting the local terminal 2 to the host computer 1 through the network to remotely control the emulator capability of the host computer 1 so as to compute operation data indicative of the operation of the electronic musical instrument 3 upon emulation thereof, downloading the computed operation data from the host computer 1 into the music apparatus through the local terminal 2, and virtually operating the music apparatus to function as the electronic musical instrument 3 to investigate and learn performance thereof according to the downloaded operation data without actually operating the music apparatus.

In an advanced form of the invention, the various capabilities installed in the host computer can be selectively transferred to the music apparatus through the local terminal. Namely, The inventive system shown in FIG. 1 is constructed for extending a desired capability of a music apparatus having a function of the electronic musical instrument 3 under control by the local terminal 2 which is communicable with the host computer 1 through a network. In the inventive system, the host computer 1 is installed with a program composed of a function module which is executable to provide the desired capability and a first interface module which interfaces the function module with the local terminal 2 through the network when the local terminal 2 remotely executes the function module installed in the host computer 1. The host computer 1 is further installed with a second interface module which is specifically prepared to adapt the function module to the music apparatus. The local terminal 2 is connected to the host computer 1 through the network to download a set of the function module and the second interface module from the host computer. The music apparatus is equipped in the local terminal 2 and has a storage for storing the set of the function module and the second interface module downloaded by the local terminal 1. The music apparatus internally executes the stored function module through the stored second interface module to thereby extend the desired capability as the electronic musical instrument 3.

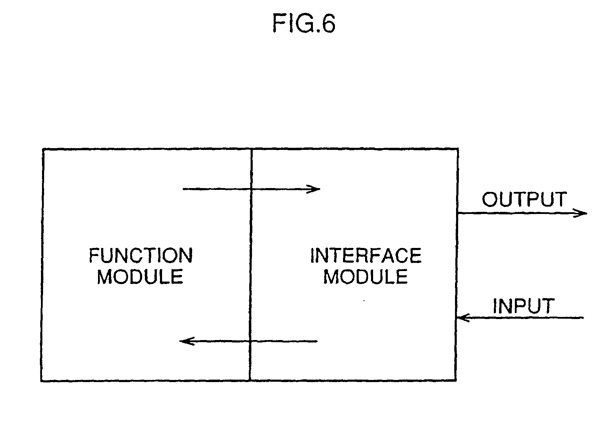

In detail, as shown in FIG. 6, each application program installed in the host computer 1 for implementing the timbre synthesis capability, the automatic accompaniment capability, and the electronic musical instrument simulating capability is divided into the function module for implementing these capabilities and the first interface module for mainly interfacing the function module with the outside or the network. Further, the second interface module for an electronic musical instrument (interface for a music apparatus), other than the first interface module of the functional program, is provided in the host computer 1 in correspondence with the function module along with each application program. The second interface module for the electronic musical instrument and the corresponding function module can be downloaded into a RAM of the electronic musical instrument 3 as a set via the local terminal 2 to introduce desired one of the capabilities into the electronic musical instrument 3.

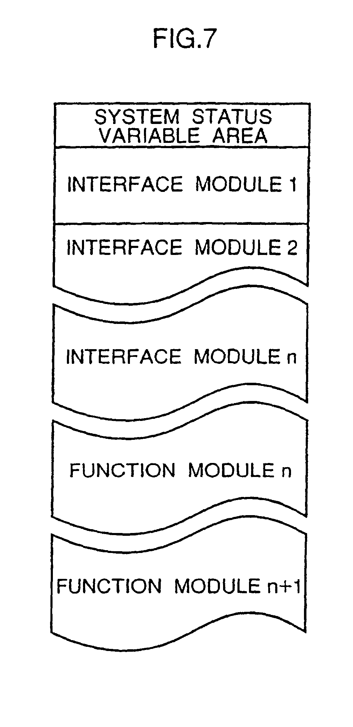

Namely, as shown in FIG. 7, the electronic musical instrument 3 stores in the RAM thereof a plurality of second interface modules specifically prepared for the electronic musical instrument 3 and a plurality of corresponding function modules. Each interface module controls the corresponding function module to implement the capability. It should be noted that, since each function module is provided for each capability, two or more interface modules and function modules may operate simultaneously in the electronic musical instrument 3. In view of this, a system status variable area is provided as shown in FIG. 7, the area having a structure allowing reference to important system values such that the states of the modules can be recognized as a whole. Each interface module is adapted to reference this system status variable area, and coexists while rewriting this area without causing contraction between the modules. It will be apparent that this control over the entire system may not be performed by each interface module; rather, the electronic musical instrument 3 may be constituted to control the entire system and to allocate jobs to the interface modules and the function modules according to the status thereof.

Namely, the advanced form of the invention is directed to a method of extending a desired capability of a music apparatus having a function of the electronic musical instrument 3 under control by the local terminal 2 which is communicable with the host computer 1 through a network. The method comprises the steps of installing the host computer 3 with a program composed of a function module which is executable to provide the desired capability and a first interface module which interfaces the function module with the local terminal 2 through the network when the local terminal 2 remotely executes the function module installed in the host computer 1, preparing in the host computer 1 a second interface module which is specifically designed to adapt the function module to the music apparatus, connecting the local terminal 2 to the host computer 1 through the network to download a set of the function module and the second interface module into the music apparatus by means of the local terminal 2, and allowing the music apparatus to internally execute the downloaded function module through the downloaded second interface module to thereby extend the desired capability as the electronic musical instrument 3.

Further, the invention is directed to a music apparatus attachable to the local terminal 2 which is communicable with the host computer 1 through a network for extending a desired capability of the music apparatus having function of the electronic musical instrument 3. The host computer 1 is installed with a program composed of a function module which is executable to provide the desired capability and a first interface module which interfaces the function module with the local terminal 2 through the network when the local terminal 2 remotely executes the function module installed in the host computer 1. The host computer 1 is further installed with a second interface module which is specifically prepared to adapt the function module to the music apparatus. The inventive music apparatus comprises means for commanding the local terminal 2 to communicate with the host computer 1 through the network to download a set of the function module and the second interface module from the host computer 1, means for storing the set of the function module and the second interface module downloaded by the local terminal 2, and means for internally executing the stored function module through the stored second interface module to thereby extend the desired capability as the electronic musical instrument 3. Thus, the electronic musical instrument 3 can implement various new capabilities associated with the function of the electronic musical instrument by the function modules corresponding to the plurality of interface modules. Appropriately providing the host computer 1 with such a function allows easy upgrading of electronic musical instruments.

In the above described embodiments, the electronic musical instrument is used as the music apparatus. However, the music apparatus is not limited to the electronic musical instrument in the invention. For example, the music apparatus can be composed of a personal computer having function of an electronic musical instrument implemented by an application software. In such a case, a storage device such as a hard disk may store operation programs provided in the form of application software or else and related information used for realizing these local terminal and the music apparatus. The CPU loads these programs and information into RAM. Moreover, data and instructions stored in a removable and machine-readable record medium such as CD-ROM (Compact Disk Read Only Memory), floppy disk and magneto-optical disk may be transferred to a storage device such as the hard disk. Such a construction may facilitate installation of additional operation programs and related information and update thereof for version-up or else. Otherwise, program instructions may be directly transferred from the removable record medium to RAM.

Instead of the removable record medium, the operation programs and related information can be downloaded from a communication network to the hard disk through a communication interface. The following is an example in which the operation programs and related information is downloaded from the network. The communication interface is connected through a communication network such as LAN (Local Area Network), INTERNET AND telephone line to a server computer. The client local terminal sends a request command for the operation program and related information to the server computer through the communication interface and the communication network, if own storage device such as a hard disk does not have the operation program and related information. Upon receipt of the request command, the server computer distributes the requested program and related information to the local terminal through the communication network. The local terminal receives the distributed operation program and related information through the communication interface, and reserves the same in the storage device to thereby complete downloading.

The local terminal is implemented by a commercially available personal computer installed with the above mentioned operation program and related information. In such a case, data including the operation program and related information can be distributed by means of nonvolatile memory such as ROM, machine readable medium and communication interface.

As described and according to the invention, use of a network composed of a host computer and a local terminal allows extension of electronic musical instrument capabilities without restrictions of the local terminal. According to the methods of extending electronic musical instrument capabilities associated with the invention, if an electronic musical instrument itself has no timbre synthesis capability, timbres can be set by using the timbre data that can be handled by this electronic musical instrument. In addition, if an electronic musical instrument itself has no automatic accompaniment capability, automatic accompaniment can be performed by using the play data that can be handled by this electronic musical instrument. Moreover, the specifications, capabilities, and handling of a particular electronic musical instrument can be examined by using emulation. Further, according to the present invention, new capabilities can be added to an electronic musical instrument and the same can be upgraded with ease.

## Claims

1. A method of operating a music apparatus (3) having a function as an electronic musical instrument under control by a terminal apparatus (2) which is communicable with a host apparatus (1) through a network, the method comprising the steps of:
(a) installing the host apparatus (1) with a capability utilized to provide function modules effective to extend the function of the electronic musical instrument;
(b) connecting the terminal apparatus (2) to the host apparatus (1) through the network to remotely control the capability of the host apparatus (1) so as to provide said function modules;
(c) downloading said function modules from the host apparatus (1) into the music apparatus (3) through the terminal apparatus (2); and
(d) operating the music apparatus (3) according to the downloaded function modules to extend its own function as an electronic musical instrument.

2. The method according to claim 1, wherein the step of operating further comprises manually operating the music apparatus (3) to play the desired song along an accompaniment of the automatic play.

3. A terminal apparatus (2) communicable with a host apparatus (1) through a network for operating a music apparatus (3) which is equipped in the terminal apparatus (2) and which has a function as an electronic musical instrument,
the terminal apparatus (2) comprising:
(i) means for communicating with the host apparatus (1) through the network to remotely control the capability of the host apparatus (1) so as to provide function modules effective to extend the function of the electronic musical instrument;
(ii) means for downloading the provided function modules from the host apparatus (1) into the music apparatus (3) through the network; and
(iii) means for allowing the music apparatus (3) to operate according to the downloaded function modules to extend its own function as the electronic musical instrument.

4. A music apparatus (3) having a function as an electronic musical instrument under control by a terminal apparatus (2) which is connectable through a network with a host apparatus (1) installed with a capability utilized to provide function modules effective to extend the function of the electronic musical instrument,
to remotely control the capability of the host apparatus (1) so as to provide said function modules,
and to download the provided function modules
from the host apparatus (1) into the music apparatus (3) through the terminal apparatus (2);
wherein the music apparatus (3) is operative according to the downloaded data to extend its own function as the electronic musical instrument.

5. The music apparatus (3) according to claim 4, further comprising:
(i) means for commanding the terminal apparatus (2) to communicate with the host apparatus (1) installed with
- a program composed of a function module executable to provide the desired capability and a first interface module which interfaces the function module with the terminal apparatus (2) through the network when the terminal apparatus (2) remotely executes the function module installed in the host apparatus (1);
- a second interface module which is specifically designed to adapt the function module to the music apparatus (3),
through the network to download a set of the function module and the second interface module from the host apparatus (1)
(ii) means for storing the set of the function module and the second interface module downloaded by the terminal apparatus (2); and
(iii) means for internally executing the stored function module through the stored second interface module to thereby extend the desired capability as the electronic musical instrument.

6. A host apparatus (1) for extending the desired capability of a music apparatus (3) having a function of an electronic musical instrument under control by a terminal apparatus (2) which is communicable with said host apparatus (1) through a network,
installed with a capability utilized to provide function modules effective to extend the function of an electronic musical instrument, said capability being remotely controllable by said terminal apparatus (2) so as to provide said function modules, the terminal apparatus (2) downloading the provided function modules from said host apparatus (1) into the music apparatus (3) which is operative according to the downloaded data to extend its own function as the electronic musical instrument.

7. The host apparatus according to claim 6, wherein the host apparatus (1) is installed with a synthesizer capability utilized to provide timbre data effective to set a desired timbre of a musical tone so that the music apparatus (3) operates to function as the electronic musical instrument to generate the musical tone having the desired timbre set by the downloaded timbre data.

8. The host apparatus according to claim 6, wherein the host apparatus (1) is installed with a sequencer capability utilized to provide automatic play data by time-sequentially processing song data which is provided from the terminal apparatus (2) and which indicates a desired song so that the music apparatus (3) operates to function as the electronic musical instrument to undergo an automatic play of the desired song according to the downloaded automatic play data.

9. The host apparatus according to claim 6, wherein the host apparatus (1) is installed with an emulator capability utilized to emulate an operation of the electronic musical instrument so as to provide operation data indicative of the operation of the electronic musical instrument upon emulation thereof so that the music apparatus (3) is virtually operated to function as the electronic musical instrument to investigate performance thereof according to the downloaded operation data without actually operating the music apparatus (3).

10. The host apparatus (1) according to claim 6, installed with
- a program composed of a function module executable to provide the desired capability and a first interface module which interfaces the function module with the terminal apparatus (2) through the network when the terminal apparatus (2) remotely executes the function module installed in the host apparatus (1);
- a second interface module which is specifically designed to adapt the function module to the music apparatus (3),
wherein a set of said function module and said second interface module can be downloaded into the music apparatus (3) by means of the terminal apparatus (2), thereby allowing the music apparatus (3) to internally execute the downloaded function module through the downloaded second interface module to thereby extend the desired capability as the electronic musical instrument.

11. A system for operating a music apparatus (3) having a function as an electronic musical instrument under control by a terminal apparatus (2) which is communicable with a host apparatus (1) through a network, wherein the system comprises:
- a host apparatus (1) according to any of claims 6-10,
- a terminal apparatus (2) according to claim 3, and
- a music apparatus (3) according to any of claims 4-5

12. A machine readable medium for use in a host apparatus (1) which has a CPU and which is communicable with a terminal apparatus (2) through a network, the medium containing program instructions executable by the CPU for causing the host apparatus (1) to extend a capability of a music apparatus (3) having a function of an electronic musical instrument under the control of the terminal apparatus (2), by the steps of:
installing the host apparatus (1) with a program composed of a function module which is executable to provide the desired capability and a first interface module which interfaces the function module with the terminal apparatus (2) through the network when the terminal apparatus (2) remotely executes the function module installed in the host apparatus (1);
preparing in the host apparatus (1) a second interface module which is specifically designed to adapt the function module to the music apparatus (3); and
connecting the host apparatus (1) to the terminal apparatus (2) through the network to download a set of the function module and the second interface module into the music apparatus (3) by means of the terminal apparatus (2), thereby allowing the music apparatus (3) to internally execute the downloaded function module through the downloaded second interface module to thereby extend the desired capability as the electronic musical instrument.

13. A machine readable medium for use in a music apparatus (3) which has a CPU and which is attachable to a terminal apparatus (2) communicable with a host apparatus (1) through a network for extending a desired capability of the music apparatus (3) having a function of an electronic musical instrument, the medium containing instructions processed by the CPU for causing the music apparatus (3) to perform the steps of:
commanding the terminal apparatus (2) to communicate with the host apparatus (1) through the network to download a set of the function module and an interface module from the host apparatus (1);
storing the set of the function module and the interface module downloaded by the terminal apparatus (2); and
internally executing the stored function module through the stored interface module to thereby extend the desired capability as the electronic musical instrument.

## Patentansprüche

1. Verfahren zum Betreiben einer Musikvorrichtung (3) mit einer Funktion als elektronisches Musikinstrument, die durch ein Endgerät (2) gesteuert wird, welches mit einem Host-Gerät (1) über ein Netzwerk kommunizieren kann, wobei das Verfahren die folgenden Schritte aufweist:
(a) Ausstatten des Host-Geräts (1) mit einer Fähigkeit, die zum Bereitstellen von Funktions-Modulen verwendet wird, die wirksam sind, die Funktion des elektronischen Musikinstruments zu erweitern;
(b) Verbinden des Endgerätes (2) mit dem Host-Gerät (1) über das Netzwerk, um die Fähigkeit des Host-Geräts (1) fernzusteuern, so dass die Funktions-Module bereitgestellt werden;
(c) Herunterladen der Funktions-Module von dem Host-Gerät (1) in die Musikvorrichtung (3) durch das Endgerät (2); und
(d) Betreiben der Musikvorrichtung (3) in Entsprechung zu den heruntergeladenen Funktions-Modulen zur Erweiterung ihrer eigenen Funktion als elektronisches Musikinstrument.

2. Verfahren nach Anspruch 1, bei dem der Schritt des Betreibens ferner ein manuelles Betätigen der Musikvorrichtung (3) umfaßt, um das gewünschte Lied zusammen mit einer Begleitung des automatischen Spiels zu spielen.

3. Endgerät (2), das mit einem Host-Gerät (1) über ein Netzwerk zum Betreiben einer Musikvorrichtung (3) kommunizieren kann, welche in dem Endgerät (2) eingerichtet ist und welche eine Funktion als elektronisches Musikinstrument umfaßt,
wobei das Endgerät (2) folgendes aufweist:
(i) Mittel zum Kommunizieren mit dem Host-Gerät (1) über das Netzwerk, um die Fähigkeit des Host-Gerätes (1) fernzusteuern, so dass die Funktions-Module bereitgestellt werden, die wirksam sind, die Funktion des elektronischen Musikinstruments zu erweitern;
( ii) Mittel zum Herunterladen der bereitgestellten Funktions-Module von dem Host-Gerät (1) in die Musikvorrichtung (3) über das Netzwerk; und
(iii) Mittel, um der Musikvorrichtung (3) zu gestatten, in Entsprechung zu den heruntergeladenen Funktions-Modulen zu arbeiten, zur Erweiterung ihrer eigenen Funktion als elektronisches Musikinstrument.

4. Musikvorrichtung (3) mit einer Funktion als elektronisches Musikinstrument, die durch ein Endgerät (2) gesteuert wird, welches über ein Netzwerk mit einem Host-Gerät (1) verbindbar ist, das mit einer Fähigkeit ausgestattet ist, Funktions-Module bereitzustellen, die wirksam sind, die Funktion des elektronischen Musikinstruments zu erweitern, um die Fähigkeit des Host-Gerätes (1) fernzusteuern, so dass Funktions-Module bereitgestellt werden, und
um die bereitgestellten Funktions-Module von dem Host-Gerät (1) in die Musikvorrichtung (3) durch das Endgerät (2) herunterzuladen;
wobei die Musikvorrichtung (3) in Entsprechung zu den geladenen Daten arbeitet, so dass ihre eigene Funktion als elektronisches Musikinstrument erweitert wird.

5. Musikvorrichtung (3) nach Anspruch 4, die ferner folgendes aufweist:
(i) Mittel, um dem Endgerät (2) zu befehlen mit dem Host-Gerät (1) zu kommunizieren, welches mit folgendem ausgestattet ist:
- ein aus einem Funktions-Modul bestehendes Programm, das ausgeführt werden kann, um das gewünschte Leistungspektrum und ein erstes Schnittstellen-Modul bereitzustellen, welches das Funktions-Modul mit dem Endgerät (2) über das Netzwerk verbindet, wenn das Endgerät (2) das in dem Host-Gerät (1) installierte Funktions-Modul fernausführt:
- ein zweites Schnittstellen-Modul, welches spezifisch ausgelegt, das Funktions-Modul an die Musikvorrichtung (3) anzupassen, über das Netzwerk, um einen Satz des Funktions-Moduls und das zweite Schnittstellen-Modul von dem Host-Gerät (1) herunterzuladen,
(ii) Mittel zum Speichern des Satzes des Funktions-Moduls und des zweiten Schnittstellen-Moduls, die durch das Endgerät (2) heruntergeladen wurden; und
(iii) Mittel zum internen Ausführen des gespeicherten Funktions-Moduls durch das gespeicherte zweite Schnittstellen-Modul, um dadurch das gewünschte Leistungsspektrum als elektronisches Musikinstrument zu erweitern.

6. Host-Gerät (1) zum Erweitern des gewünschten Leistungsspektrums einer Musikvorrichtung (3) mit einer Funktion als elektronisches Musikinstrument, die durch ein Endgerät (2) gesteuert wird, welches mit dem Host-Gerät (1) über ein Netzwerk kommunizieren kann,
welches mit einer Fähigkeit zum Erzeugen von Funktions-Mudulen ausgestattet ist, die wirksam sind, die Funktion des elektronischen Musikinstruments zu erweitern, wobei die genannte Fähigkeit durch das Endgerät (2) fernsteuerbar ist, so dass die Funktions-Module bereitgestellt werden, wobei das Endgerät (2) die bereitgestellten Funktions-Module von dem Host-Gerät (1) in die Musikvorrichtung (3) herunterlädt, welche in Entsprechung zu den geladenen Daten arbeitet, zur Erweiterung ihrer eigenen Funktion als elektronisches Musikinstrument.

7. Host-Gerät nach Anspruch 6, bei dem das Host-Gerät (1) mit einer Syntheziserfähigkeit ausgestattet ist, die zum Erzeugen von Timbredaten verwendbar ist, welche zum Einstellen eines gewünschten Timbre eines Musiktons wirksam sind, so dass die Musikvorrichtung (3) in der Funktion als elektronisches Musikinstrument arbeitet, um den Musikton mit dem gewünschten Timbre zu erzeugen, der durch die geladenen Timbredaten eingestellt ist.

8. Host-Gerät nach Anspruch 6, bei dem das Host-Gerät (1) mit einer Sequenzerfähigkeit ausgestattet ist, die zum Erzeugen von Daten für automatisches Spiel durch zeitlich aufeinanderfolgende Verarbeitung von Lieddaten verwendbar ist, welche von dem Endgerät (2) bereitgestellt werden und welche ein gewünschtes Lied indizieren, so dass die Musikvorrichtung (3) in der Funktion als elektronisches Musikinstrument arbeitet, um sich einem automatischen Spiel des gewünschten Liedes in Entsprechung zu den geladenen Daten für automatisches Spiel zu unterziehen.

9. Host-Gerät nach Anspruch 6, bei dem das Host-Gerät (1) mit einer Emulatorfähigkeit zum Emulieren einer Operation des elektronischen Musikinstruments ausgestattet ist, so dass Operationsdaten erzeugt werden, die für die Operation des elektronischen Musikinstruments nach seiner Emulation kennzeichnend sind, so dass das Musikinstrument (3) in der Funktion als elektronisches Musikinstrument virtuell arbeitet, um ihre Betriebsweise in Entsprechung zu den geladenen Operationsdaten ohne aktuelles Betreiben der Musikvorrichtung (3) zu untersuchen.

10. Host-Gerät nach Anspruch 6, bei dem das Host-Gerät (1) mit folgendem ausgestattet ist,
- einem aus einem Funktions-Modul bestehenden Programm, das zum Bereitstellen des gewünschten Leistungsspektrums und eines ersten Schnittstellen-Moduls ausführbar ist, das das Funktions-Modul mit dem Endgerät (2) über das Netzwerk verbindet, wenn das Endgerät (2) das in dem Host-Gerät (1) installierte Funktions-Modul fernausführt;
- einem zweiten Schnittstellen-Modul, welches spezifisch ausgelegt, das Funktions-Modul an die Musikvorrichtung (3) anzupassen,
wobei der Satz aus dem Funktions-Modul und dem zweiten Schnittstellen-Modul in die Musikvorrichtung (3) mit Hilfe des Endgerätes (2) geladen werden kann, wodurch ermöglicht wird, dass die Musikvorrichtung (3) das geladene Funktions-Modul durch das geladene zweite Schnittstellen-Modul intern ausführt, um dadurch das gewünschte Leistungsspektrum als elektronisches Musikinstrument zu erweitern.

11. System zum Betreiben einer Musikvorrichtung (3) mit einer Funktion als elektronisches Musikinstrument, die durch ein Endgerät (2) gesteuert wird, welches mit einem Host-Gerät (1) über ein Netzwerk kommunizieren kann, wobei das System folgendes aufweist:
- ein Host-Gerät (1) nach einem der Ansprüche 6 - 10,
- ein Endgerät (2) nach Anspruch 3 und
- eine Musikvorrichtung (3) nach einem der Ansprüche 4 - 5.

12. Maschinenlesbares Medium zur Verwendung in einem Host-Gerät (1), welches eine CPU aufweist und welches mit einem Endgerät (2) über ein Netzwerk kommunizieren kann, wobei das Medium Programmbefehle enthält, die durch die CPU ausführbar sind, um zu veranlassen, dass das Host-Gerät (1) ein Leistungsspektrum einer Musikvorrichtung (3) mit einer Funktion als elektronisches Musikinstrument, die durch ein Endgerät (2) gesteuert wird, durch die folgenden Schritte erweitert:
Installieren des Host-Gerätes (1) mit einem aus einem Funktions-Modul bestehenden Programm, das zum Bereitstellen des gewünschten Leistungsspektrums und eines ersten Schnittstellen-Moduls ausgeführt werden kann, welches das Funktions-Modul mit dem Endgerät (2) über das Netzwerk verbindet, wenn das Endgerät (2) das in dem Host-Gerät (1) installierte Funktions-Modul fernausführt;
Vorbereiten eines zweiten Schnittstellen-Moduls in dem Host-Gerät (1), welches spezifisch ausgelegt ist, das Funktions-Modul an die Musikvorrichtung (3) anzupassen; und
Verbinden des Host-Geräts (1) mit dem Endgerät (2) über das Netzwerk, um einen Satz des Funktions-Moduls und des zweiten Schnittstellen-Moduls in die Musikvorrichtung (3) mit Hilfe des Endgerätes (2) herunterzuladen, wobei ermöglicht wird, dass die Musikvorrichtung (3) das geladene Funktions-Modul durch das geladene zweite Schnittstellen-Modul intern ausführt, um dadurch das gewünschte Leistungspektrum als elektronisches Musikinstrument zu erweitern.

13. Maschinenlesbares Medium zur Verwendung in einer Musikvorrichtung (3) welches eine CPU aufweist und welches an ein Endgerät (2) anfügbar ist, das mit einem Host-Gerät (1) über ein Netzwerk kommunizieren kann, zur Erweiterung eines gewünschten Leistungsspektrums einer Musikvorrichtung (3) mit einer Funktion als elektronisches Musikinstrument, wobei das Medium Befehle enthält, die durch CPU verarbeitet werden, um zu veranlassen, dass die Musikvorrichtung (3) die folgenden Schritte ausführt:
dem Endgerät (2) befehlen, mit dem Host-Gerät (1) über das Netzwerk zu kommunizieren, um einen Satz des Funktions-Moduls und des Schnittstellen-Moduls aus dem Host-Gerät (1) herunterzuladen;
Speichern des Satzes des Funktions-Moduls und des Schnittstellen-Moduls, die durch das Endgerät (2) heruntergeladen werden; und
internes Ausführen des gespeicherten Funktions-Moduls über das gespeicherte Schnittstellen-Modul, um dadurch das gewünschte Leistungsspektrum als elektronisches Musikinstrument zu erweitern.

## Revendications

1. Procédé de fonctionnement d'un dispositif musical (3) ayant une fonctionnalité d'instrument de musique électronique sous contrôle d'un dispositif terminal (2) qui peut être mis en communication avec un dispositif hôte (1) par l'intermédiaire d'un réseau, le procédé comprenant les étapes consistant à :
(a) installer le dispositif hôte (1) avec une capacité utilisée pour fournir des modules de fonction capables d'augmenter la fonctionnalité de l'instrument de musique électronique ;
(b) connecter le dispositif terminal (2) au dispositif hôte (1) par l'intermédiaire du réseau pour télécommander la capacité du dispositif hôte (1) de façon à fournir lesdits modules de fonction ;
(c) télécharger lesdits modules de fonction depuis le dispositif hôte (1) dans le dispositif musical (3) par l'intermédiaire du dispositif terminal (2) ; et
(d) utiliser le dispositif musical (3) selon les modules de fonction téléchargés pour augmenter sa propre fonctionnalité d'instrument de musique électronique.

2. Procédé selon la revendication 1, selon lequel l'étape d'utilisation comprend également une commande manuelle du dispositif musical (3) pour exécuter la chanson souhaitée avec un accompagnement exécuté automatiquement.

3. Dispositif terminal (2) qui peut être mis en communication avec un dispositif hôte (1) par l'intermédiaire d'un réseau pour commander un dispositif musical (3) qui est installé dans le dispositif terminal (2) et qui a une fonctionnalité d'instrument de musique électronique, le dispositif terminal (2) comprenant :
(i) des moyens pour communiquer avec le dispositif hôte (1) par l'intermédiaire du réseau, pour télécommander une capacité du dispositif hôte (1) de façon à fournir des modules de fonction capables d'augmenter la fonctionnalité de l'instrument de musique électronique ;
(ii) des moyens pour télécharger les modules de fonction fournis depuis le dispositif hôte (1) dans le dispositif musical (3) par l'intermédiaire du réseau ; et
(iii) des moyens pour permettre au dispositif musical (3) de fonctionner selon les modules de fonction téléchargés pour augmenter sa propre fonctionnalité d'instrument de musique électronique.

4. Dispositif musical (3) ayant une fonctionnalité d'instrument de musique électronique sous la commande d'un dispositif terminal (2) qui peut être connecté, par l'intermédiaire d'un réseau, à un dispositif hôte (1) dans lequel est installée une capacité utilisée pour fournir des modules de fonction capables d'augmenter la fonctionnalité de l'instrument de musique électronique, pour télécommander la capacité du dispositif hôte (1) de façon à fournir lesdits modules de fonction, et pour télécharger les modules de fonction fournis depuis le dispositif hôte (1) dans le dispositif musical (3) par l'intermédiaire du dispositif terminal (2) ;
dans lequel le dispositif musical (3) fonctionne selon les données téléchargées pour augmenter sa propre fonctionnalité d'instrument de musique électronique.

5. Dispositif musical (3) selon la revendication 4, **caractérisé en ce qu'**il comprend également :
(i) des moyens pour commander au dispositif terminal (2) de communiquer avec le dispositif hôte (1) dans lequel sont installés :
- un programme composé d'un module de fonction exécutable pour fournir la capacité souhaitée et d'un premier module d'interface qui connecte le module de fonction avec le dispositif terminal (2) par l'intermédiaire du réseau lorsque le dispositif terminal (2) exécute sous télécommande le module de fonction installé dans le dispositif hôte (1) ;
- un second module d'interface qui est spécifiquement conçu pour adapter le module de fonction au dispositif musical (3),
par l'intermédiaire du réseau pour télécharger un ensemble composé du module de fonction et du second module d'interface depuis le dispositif hôte (1),
(ii) des moyens pour mémoriser l'ensemble composé du module de fonction et du second module d'interface téléchargés par le dispositif terminal (2) ; et
(iii) des moyens d'exécution interne du module de fonction mémorisé par l'intermédiaire du second module d'interface mémorisé pour augmenter ainsi la fonctionnalité souhaitée d'instrument de musique électronique.

6. Dispositif hôte (1) pour augmenter la fonctionnalité souhaitée d'un dispositif musical (3) ayant une fonctionnalité d'instrument de musique électronique sous commande d'un dispositif terminal (2) qui est capable d'être mis en communication avec ledit dispositif hôte (1) par l'intermédiaire d'un réseau,
dans lequel est installée une capacité utilisée pour fournir des modules de fonction capables d'augmenter la fonctionnalité d'un instrument de musique électronique, ladite capacité pouvant être télécommandée par ledit dispositif terminal (2) de façon à fournir lesdits modules de fonction, le dispositif terminal (2) téléchargeant les modules de fonction fournis depuis ledit dispositif hôte (1) dans le dispositif musical (3) qui fonctionne selon les données téléchargées de façon à augmenter sa propre fonctionnalité d'instrument de musique électronique.

7. Dispositif hôte selon la revendication 6, dans lequel le dispositif hôte (1) est installé avec une capacité pour synthétiseur utilisée pour fournir des données de timbre qui permettent de définir un timbre souhaité d'un son musical, de sorte que le dispositif musical (3) est utilisé pour fonctionner comme instrument de musique électronique pour produire le son musical ayant le timbre souhaité, déterminé par les données de timbre téléchargées.

8. Dispositif hôte selon la revendication 6, dans lequel le dispositif hôte (1) est installé avec une capacité pour séquenceur utilisée pour fournir des données d'exécution automatique en traitant successivement des données de chanson qui proviennent du dispositif terminal (2) et qui indiquent une chanson souhaitée de sorte que le dispositif musical (3) est utilisé pour fonctionner comme instrument de musique électronique pour réaliser une exécution automatique de la chanson souhaitée selon les données d'exécution automatique téléchargées.

9. Dispositif hôte selon la revendication 6, dans lequel le dispositif hôte (1) est installé avec une capacité pour émulateur utilisée pour émuler un fonctionnement de l'instrument de musique électronique afin de fournir des données de fonctionnement indicatives de l'opération de fonctionnement de l'instrument de musique électronique à émuler, de sorte que le dispositif musical (3) est virtuellement exploité pour fonctionner comme instrument de musique électronique afin d'étudier ses performances selon les données de fonctionnement téléchargées, sans faire réellement fonctionner le dispositif musical (3).

10. Dispositif hôte (1) selon la revendication 6, **caractérisé en ce qu'**il est installé avec :
- un programme composé d'un module de fonction exécutable pour fournir la capacité souhaitée et un premier module d'interface qui connecte le module de fonction avec le dispositif terminal (2) par l'intermédiaire du réseau lorsque le dispositif terminal (2) exécute sous télécommande le module de fonction installé dans le dispositif hôte (1) ;
- un second module d'interface qui est spécifiquement conçu pour adapter le module de fonction au dispositif musical (3),
dans lequel un ensemble composé dudit module de fonction et dudit second module d'interface peut être téléchargé dans le dispositif musical (3) par des moyens du dispositif terminal (2) ce qui permet au dispositif musical (3) d'exécuter de façon interne le module de fonction téléchargé par l'intermédiaire du second module d'interface téléchargé, de façon à augmenter la capacité souhaitée comme instrument de musique électronique.

11. Système de fonctionnement d'un dispositif musical (3) ayant une fonctionnalité d'instrument de musique électronique sous le contrôle d'un dispositif terminal (2) qui peut être mis en communication avec un dispositif hôte (1) par l'intermédiaire d'un réseau, le système comprenant :
- un dispositif hôte (1) selon l'une quelconque des revendications 6 à 10,
- un dispositif terminal (2) selon la revendication 3, et
- un dispositif musical (3) selon l'une quelconque des revendications 4 et 5.

12. Support exploitable par une machine, destiné à être utilisé dans un dispositif hôte (1) pourvu d'une unité centrale et qui peut être mis en communication avec un dispositif terminal (2) par l'intermédiaire d'un réseau, le support contenant des instructions de programme exécutables par l'unité centrale pour faire augmenter, par le dispositif hôte (1), une capacité d'un dispositif musical (3) ayant une fonction d'un instrument de musique électronique sous le contrôle du dispositif terminal (2), au moyen des étapes consistant à :
- installer le dispositif hôte (1) avec un programme composé d'un module de fonction qui peut être exécuté pour fournir la capacité souhaitée et un premier module d'interface qui connecte le module de fonction avec le dispositif terminal (2) par l'intermédiaire du réseau lorsque le dispositif terminal (2) exécute sous télécommande le module de fonction installé dans le dispositif hôte (1) ;
- préparer, dans le dispositif hôte (1), un second module d'interface qui est spécifiquement conçu pour adapter le module de fonction au dispositif musical (3) ; et
- connecter le dispositif hôte (1) au dispositif terminal (2) par l'intermédiaire du réseau pour télécharger un ensemble composé du module de fonction et du second module d'interface dans le dispositif musical (3) par l'intermédiaire du dispositif terminal (2), permettant ainsi au dispositif musical (3) d'exécuter de façon interne le module de fonction téléchargé par l'intermédiaire du second module d'interface téléchargé de façon à augmenter la capacité souhaitée comme instrument de musique électronique.

13. Support exploitable par une machine, destiné à être utilisé dans un dispositif musical (3) pourvu d'une unité centrale et qui peut être connecté à un dispositif terminal (2) pouvant être mis en communication avec un dispositif hôte (1) par l'intermédiaire d'un réseau pour augmenter une capacité souhaitée du dispositif musical (3), ayant une fonction d'instrument de musique électronique, le support contenant des instructions traitées par l'unité centrale pour faire exécuter, par le dispositif musical (3), les étapes consistant à :
- commander au dispositif terminal (2) de communiquer avec le dispositif hôte (1) par l'intermédiaire du réseau pour télécharger un ensemble composé du module de fonction et d'un module d'interface depuis le dispositif hôte (1) ;
- mémoriser l'ensemble composé du module de fonction et du module d'interface, téléchargé par le dispositif terminal (2) ; et
- exécuter de façon interne le module de fonction mémorisé, par l'intermédiaire du module d'interface mémorisé, pour augmenter ainsi la capacité souhaitée comme instrument de musique électronique.
